# EUROPEAN PATENT APPLICATION

(11) **EP 3 951 445 A1**
(43) Date of publication of application: **09.02.2022**
(21) Application number: 20778702.9
(22) Date of filing: 25.03.2020
(51) Int. Cl.: G02B 1/113, B60K 35/00, G02B 1/115, G02B 3/00, G02B 5/02, G02B 27/01

(54) **FINE UNEVEN PATTERN FILM AND HEAD-UP DISPLAY DEVICE**

(30) Priority: 27.03.2019 JP 2019060207
(71) Applicant: Kuraray Co., Ltd., Kurashiki-shi, Okayama 710-0801 (JP)
(72) Inventor: TAKAHASHI, Tomohiro, Kamisu-shi, Ibaraki 314-0197 (JP); NATSUME, Takashi, Kamisu-shi, Ibaraki 314-0197 (JP); KARAI, Masaru, Kamisu-shi, Ibaraki 314-0197 (JP)
(74) Representative: Müller-Boré & Partner Patentanwälte PartG mbB
(86) International application number: PCT/JP2020/013330
(87) International publication number: WO 2020/196620

(57) **Abstract**

The present invention provides a fine concave and convex pattern film in which a crack is prevented from occurring in an antireflection film even in a high-temperature use environment assumed in an in-vehicle application or the like. The fine concave and convex pattern film according to the present invention includes a base material film (10) having a fine concave and convex pattern (P) on at least a part of its surface and an antireflection film (3) composed of an inorganic film formed on at least a part of a surface of the fine concave and convex pattern (P).

## Description

### Technical Field

The present invention relates to a fine concave and convex pattern film having an antireflection film on its surface, and a head-up display device using the same.

### Background Art

In recent years, in an optical device to be used in various fields, plastic has been used as a material for an optical component such as a lens from needs for cost reduction, reduction in weight, and miniaturization. Correspondingly, a required characteristic for an antireflection film provided in the optical component made of plastic has also been increasingly stringent.

Generally, an inorganic oxide film having a single-layer structure or a multi-layer structure has been used as an antireflection film to be provided on a surface of an optical member, and a vacuum evaporation technique or a sputtering technique has been used for formation of the film. The most common configuration of the antireflection film is a configuration in which high refractive index materials and low refractive index materials are alternately laminated. To reduce the number of layers to be laminated, medium refractive index materials may be used. Example of the high refractive index materials to be used include TiO₂, ZrO₂, and Nb₂O₅, and examples of the low refractive index materials to be used include SiO₂ and MgF₂. Examples of the medium refractive index materials to be used include Al₂O₃ and Y₂O₃.

In the antireflection film to be formed on the surface of the optical component made of plastic, respective reliabilities for strength, adhesion, heat resistance, and the like are also important in addition to an antireflection property being excellent. Particularly, plastic is weak against heat or is easily subjected to thermal expansion or thermal deformation. Accordingly, deterioration in quality caused by these properties may become a problem. The antireflection film using the inorganic oxide film formed using a vacuum deposition technique or the like has a thermal expansion coefficient significantly smaller than that of plastic. Accordingly, a crack tends to easily occur in the antireflection film due to thermal expansion or deformation of base material plastic. Particularly, in applications such as an automobile application, a use in a high-temperature environment is assumed, and a higher heat resistance is required for the antireflection film.

Examples of the related art directed to solving the above-described problem include Patent Literatures 1 and 2.

Patent Literature 1 discloses a lens having an antireflection film formed on its lens surface having a crack induction line including fine projected portions or recessed portions each having such a height or depth as not to adversely affect an optical performance formed thereon (Claim 1).

Patent Literature 2 discloses a method of irradiating a vaporized material forming an antireflection film with an electron beam in a process for forming the antireflection film by evaporation on a microlens (Claim 1).

### Citation List

### Patent Literature

Patent Literature 1
   Japanese Unexamined Patent Application Publication No. 2011-002627
Patent Literature 2
   Japanese Unexamined Patent Application Publication No. 2000-156486

### Summary of Invention

### Technical Problem

In a technique described in Patent Literature 1, the dimensions of the crack induction line are a period of approximately 200 nm and a height of approximately 100 nm. Accordingly, it takes time to produce the crack induction line when an optical component increases in area.

In a technique described in Patent Literature 2, an evaporation material is activated so that adhesion of the antireflection film is improved. When a stress remaining in the antireflection film is relaxed, a crack is prevented from occurring. However, a dedicated facility needs to be prepared, resulting in an increase in cost.

An object of the present invention is to provide a fine concave and convex pattern film in which a crack is prevented from occurring in an antireflection film even in a high-temperature use environment assumed in an in-vehicle application or the like.

### Solution to Problem

A fine concave and convex pattern film according to the present invention includes
a base material film having a fine concave and convex pattern on at least a part of a surface of the base material film, and an antireflection film composed of an inorganic film formed on at least a part of a surface of the fine concave and convex pattern.

The fine concave and convex pattern may be formed on a part of the surface of the base material film, and a flat portion where the fine concave and convex pattern is not formed may exist around a formation region of the fine concave and convex pattern on the surface of the base material film. In this case, the antireflection film is preferably formed on at least a part of the surface of the fine concave and convex pattern and not formed on the flat portion.

The fine concave and convex pattern is preferably a pattern having a plurality of fine projected portions or recessed portions arrayed therein, a center-center distance between the projected portions or the recessed portions adjacent to each other is preferably 5 to 500 µm, and a height of each of the projected portions or a depth of each of the recessed portions is preferably 1 to 100 µm.

Further, the fine concave and convex pattern is preferably a microlens array pattern in which a boundary portion between the projected portions adjacent to each other or a boundary portion between the recessed portions adjacent to each other is non-planar.

The antireflection film preferably has a single-layer structure or a multi-layer structure of a metal oxide film.

The fine concave and convex pattern film according to the present invention is favorable for a screen of an image display device.

A head-up display device according to the present invention includes the above-described fine concave and convex pattern film as an intermediate screen.

### Advantageous Effects of Invention

According to the present invention, there can be provided a fine concave and convex pattern film in which a crack is prevented from occurring in an antireflection film even in a high-temperature use environment assumed in an in-vehicle application or the like.

### Brief Description of the Drawings

Fig. 1 is a schematic sectional view of a fine concave and convex pattern film according to an embodiment of the present invention.
Fig. 2A is a schematic plan view of a fine concave and convex pattern film manufactured in an example 1.
Fig. 2B is a schematic plan view of a fine concave and convex pattern film manufactured in an example 2.
Fig. 2C is a schematic plan view of a fine concave and convex pattern film manufactured in an example 3.
Fig. 3 is a schematic plan view of a fine concave and convex pattern film manufactured in a comparative example 1.
Fig. 4 illustrates an optical micrograph after a heat resistance test of the fine concave and convex pattern film manufactured in the comparative example 1.

### Description of Embodiments

An embodiment of the present invention will be described in detail below with reference to the drawings.

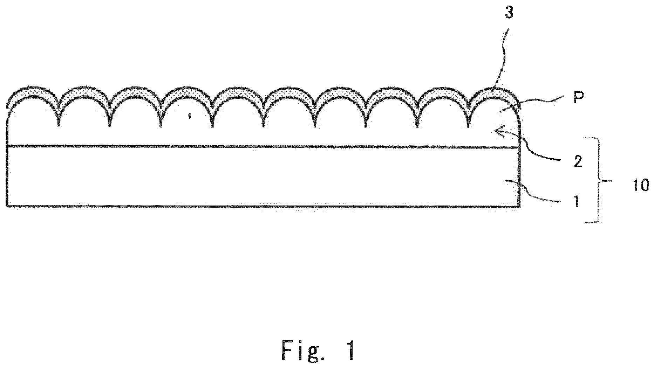

A fine concave and convex pattern film according to the present invention is a laminate film including a base material film having a fine concave and convex pattern on its surface and an antireflection film composed of an inorganic film formed on at least a part of a surface of the fine concave and convex pattern of the base material film. Fig. 1 is a schematic cross-sectional view of a fine concave and convex pattern film according to the embodiment of the present invention. In the figure, reference numeral 10 denotes a base material film, and reference numeral 3 denotes an antireflection film.

The base material film 10 may be any transparent plastic film having a fine concave and convex pattern on its surface, and may have a single-layer structure or a multi-layer structure.

In an example illustrated in Fig. 1, the base material film 10 is a laminate film obtained by forming a resin layer 2 having a fine concave and convex pattern P on its surface on a flat film main body 1.

The base material film 10 may be a single-layer film having a fine concave and convex pattern P on its surface. A configuration in this case is a configuration in which reference numeral 1 and reference numeral 2 illustrated in Fig. 1 are integrated with each other.

Examples of a material for the flat film main body 1 of the laminate film and the single-layer film having the fine concave and convex pattern P on its surface preferably include plastic having a thermal expansion coefficient of 1 × 10⁻⁵ to 20 × 10⁻⁵/°C, and desirably include polycarbonate (PC), polyethylene terephthalate (PET), and polymethyl methacrylate (PMMA).

Examples of the resin layer 2 of the laminate film include a curable resin layer formed using thermosetting resin or ultraviolet curable resin.

The fine concave and convex pattern P enables optical elements such as a microlens array, a diffractive element, and a prism to be formed.

The fine concave and convex pattern P is a pattern having a plurality of fine projected portions or recessed portions arrayed therein. A center-center distance between the projected portions or the recessed portions adjacent to each other is not particularly limited, but is preferably 5 to 500 µm, for example. The height of each of the projected portions or the depth of each of the recessed portions is not particularly limited, but is preferably 1 to 100 µm, for example.

If the fine concave and convex pattern film according to the present invention is for an intermediate screen of an image display device such as a head-up display, the fine concave and convex pattern P is desirably a microlens array pattern in which a center-center distance between the projected portions or the recessed portions adjacent to each other is 10 to 200 µm and the height of each of the projected portions or the depth of each of the recessed portions is 5 to 50 µm.

The fine concave and convex pattern P is preferably a microlens array pattern in which a boundary portion between the projected portions adjacent to each other or a boundary portion between the recessed portions adjacent to each other is non-planar.

The antireflection film 3 is an inorganic film having a single-layer structure or a multi-layer structure composed of a metal oxide.

The antireflection film 3 may be composed of one type of material having a lower refractive index than that of the fine concave and convex pattern P. If the antireflection film 3 is composed of a plurality of types of materials, materials each having a higher refractive index than that of the fine concave and convex pattern P (high refractive index materials) and materials each having a lower refractive index than that of the fine concave and convex pattern P (low refractive index materials) are preferably laminated, and the high refractive index material and the low refractive index material are preferably alternately laminated. To reduce the number of layers to be laminated, medium refractive index materials may be used.

Examples of the high refractive index materials to be used include TiO₂, ZrO₂, and Nb₂O₅, and examples of the low refractive index materials to be used include SiO₂ and MgF₂. Examples of the medium refractive index materials to be used include Al₂O₃ and Y₂O₃.

An inorganic film having a single-layer structure or a multi-layer structure can be manufactured using known techniques such as a vacuum evaporation technique and a sputtering technique.

A region where the fine concave and convex pattern P is provided (also referred to as "a formation region of the fine concave and convex pattern") may be the whole of the surface of the base material film 10, or may be a part of the surface of the base material film 10. The antireflection film 3 can be formed on the whole or a part of the surface of the fine concave and convex pattern P.

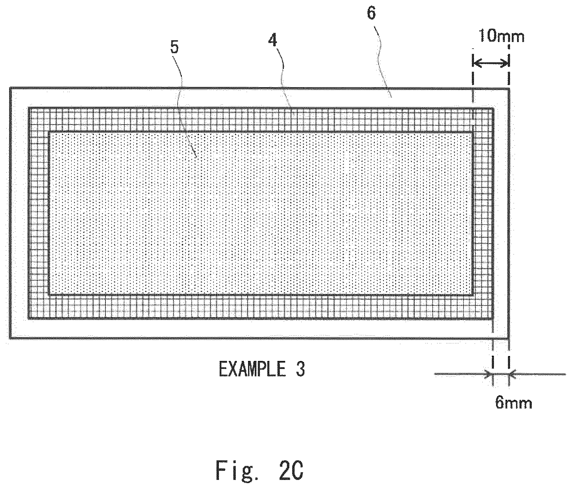

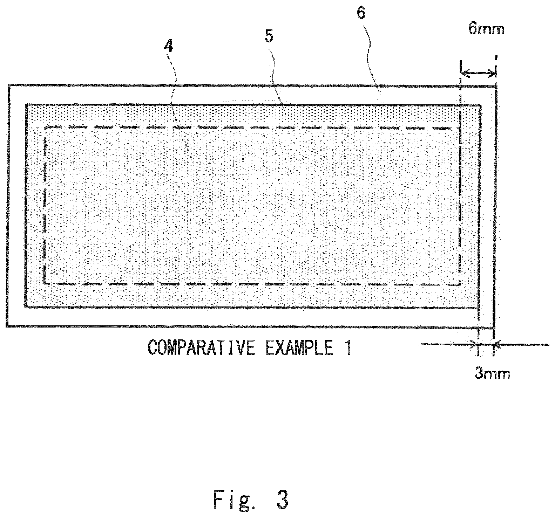

If the fine concave and convex pattern P is formed on a part of the surface of the base material film 10, and a flat portion where the fine concave and convex pattern is not formed exists around the formation region of the fine concave and convex pattern on the surface of the base material film 10, the antireflection film 3 must not be formed on the flat portion. For example, although it is desirable that the antireflection film is not formed on the flat portion, like in an example 3 (Fig. 2C), described below, it is not desirable that the antireflection film is formed on the flat portion, like in a comparative example 1 (Fig. 3), described below. In Fig. 2C and Fig. 3, reference numeral 4 denotes the formation region of the fine concave and convex pattern, reference numeral 5 denotes a formation region of the antireflection film, and reference numeral 6 denotes the flat portion.

If the antireflection film 3 is provided on the flat portion in the base material film 10, the following inconvenience occurs. When the fine concave and convex pattern film is exposed to a high-temperature environment, the base material film 10 thermally expands in an in-plane direction. At this time, the antireflection film 3 formed on the flat portion in the base material film 10 also similarly thermally expands. However, the antireflection film 3 composed of an inorganic film is generally smaller in linear expansion coefficient than the base material film 10, and thus cannot follow thermal expansion of the base material film 10. A crack may occur in the antireflection film 3 formed on the flat potion in the base material film 10. Further, the crack may spread to the antireflection film 3 formed on the fine concave and convex pattern P with the crack as a starting point. From such a reason, the antireflection film 3 must not be formed on the flat portion in the base material film 10.

If the antireflection film 3 is formed only on the fine concave and convex pattern P, the crack in the antireflection film 3 is also effectively suppressed in a high-temperature use environment assumed in an in-vehicle application or the like.

The reason why the starting point of the crack is not formed in the antireflection film 3 formed on the fine concave and convex pattern P is not necessarily clear at the current time point, but is considered as follows:
- Deformation on a fine concave and convex surface is not two-dimensional deformation only in the in-plane direction but three-dimensional deformation obtained by adding a thickness direction to the in-plane direction. As a result, an amount of deformation decreases.
- The fine concave and convex surface has a three-dimensional complicated shape. Accordingly, when the fine concave and convex pattern film is exposed to the high-temperature environment, not only a tensile stress but also a bending stress or a compression stress is generated so that such a large stress that a crack occurs is not easily generated.

For convenience of film formation of the antireflection film 3, when the antireflection film 3 needs to be formed on the flat portion in the base material film 10, the flat portion in the base material film 10 may be removed by performing additional processing such as outer-shape processing after the antireflection film 3 is formed.

If the flat portion cannot be removed, a dummy fine concave and convex pattern (e.g., a fine concave and convex pattern having an optical characteristic different from a required characteristic of a product) may be formed on the flat portion, and the antireflection film 3 may be formed thereon.

As described above, the present invention makes it possible to provide the fine concave and convex pattern film in which a crack is prevented from occurring in the antireflection film even in the high-temperature use environment assumed in the in-vehicle application or the like.

The application of the fine concave and convex pattern film according to the present invention is not particularly limited. The fine concave and convex pattern film according to the present invention is favorable for the screen of the image display device such as the head-up display device, for example. The present invention makes it possible to provide a fine concave and convex pattern film that has a performance required for the screen of the image display device and in which a crack is prevented from occurring in the antireflection film even in the high-temperature use environment assumed in the in-vehicle application or the like.

The present invention makes it possible to provide a head-up display device that includes the fine concave and convex pattern film according to the present invention as an intermediate screen and in which a crack is prevented from occurring in the intermediate screen even in the high-temperature use environment assumed in the in-vehicle application or the like.

The present invention is not limited to the above-described embodiment, but can be appropriately subjected to design changes without departing from the spirit and scope of the present invention.

### Examples

Although the present invention will be described in more detail below by way of examples, the present invention is not intended to be limited to the following examples.

### [Examples 1 to 3 and Comparative Example 1]

In each of examples 1 to 3 and the comparative example 1, a fine concave and convex pattern film was manufactured in the following manner. In these examples, conditions of a range of a formation region of a fine concave and convex pattern and a range of a formation region of an antireflection film were changed, and other conditions were common conditions.

### (Manufacture of Base Material Film)

A commercially available polycarbonate (PC) film having a thickness of 300 µm was prepared, and the film was cut, to obtain a film main body measuring 110 mm in length by 47 mm in width. A commercially available acrylic-based ultraviolet curable resin was used on the film main body, and a resin layer having a microlens array pattern having square lattices having a period of 30 µm arrayed as a fine concave and convex pattern on its surface was formed, to obtain a base material film. When a length direction (a 110 mm direction) and a width direction (a 47 mm direction) of the film main body were respectively set as an X-direction and a Y-direction, each of microlenses was an anamorphic lens in a spherical shape having a curvature radius of 73 µm in the X-direction and a spherical shape having a curvature radius of 47 µm in the Y-direction.

### (Formation of Antireflection Film)

On a surface of the microlens array pattern, SiO₂ and TiO₂ were alternately formed by an evaporation method, to form an antireflection film having a fivelayer structure. A material for and a film thickness of each of layers are as follows. The layer closest to the microlens array pattern is set as the first layer.
First layer: SiO₂, 10.9 nm in thickness,
Second layer: TiO₂, 13.6 nm in thickness,
Third layer: SiO₂, 34.3 nm in thickness,
Fourth layer: TiO₂, 113.8 nm in thickness, and
Fifth layer: SiO₂, 87.0 nm in thickness.

### (Heat Resistance Test)

A fine concave and convex pattern film obtained after the antireflection film was formed was placed in an oven at a temperature of 125°C, and was taken out after an elapse of 200 hours, to perform appearance observation using a microscope manufactured by KEYENCE CORPORATION as an optical microscope. In the comparative example 1, the fine concave and convex pattern film was placed in the oven at a temperature of 125°C again after the appearance observation, and was taken out after an elapse of 200 hours, to perform appearance observation using the microscope manufactured by KEYENCE CORPORATION again.

The temperature of 125°C is a severer temperature condition than a temperature in a high-temperature use environment assumed in an in-vehicle application or the like.

### <Example 1>

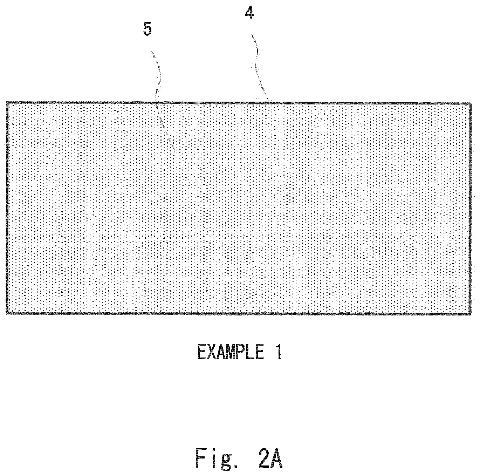

In the example 1, a microlens array pattern was formed as a fine concave and convex pattern on an entire surface of a base material film, and an antireflection film was formed on the entire surface. A schematic plan view of a fine concave and convex pattern film manufactured in this example is illustrated in Fig. 2A. In the figure, reference numeral 4 denotes a formation region of the fine concave and convex pattern, and reference numeral 5 denotes a formation region of the antireflection film. In this example, no flat portion exists in a peripheral edge portion of the base material film, and the entire surface of the base material film, the formation region of the fine concave and convex pattern, and the formation region of the antireflection film were made to completely match one another.

In this example, even after the fine concave and convex pattern film was left for 200 hours at a temperature of 125°C, no crack occurred in the antireflection film.

### <Example 2>

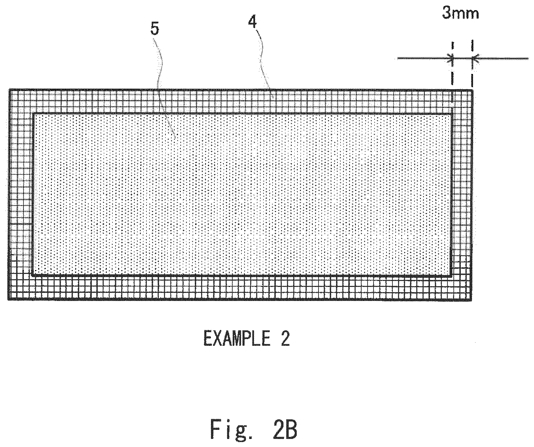

In the example 2, a microlens array pattern was formed as a fine concave and convex pattern on an entire surface of a base material film, and an antireflection film was formed in a region 3 mm inside an outer peripheral end of the base material film. In this example, although no flat portion exists in a peripheral edge portion of the base material film, and the entire surface of the base material film and a formation region of the fine concave and convex pattern were made to completely match each other, the antireflection film was formed in a smaller size than those of the base material film and the fine concave and convex pattern, and the antireflection film was not formed on a peripheral edge portion of the fine concave and convex pattern. A schematic plan view of the fine concave and convex pattern film manufactured in this example is illustrated in Fig. 2B. In the figure, reference numeral 4 denotes the formation region of the fine concave and convex pattern, and reference numeral 5 denotes a formation region of the antireflection film.

In this example, even after the fine concave and convex pattern film was left for 200 hours at a temperature of 125°C, no crack occurred in the antireflection film.

### <Example 3>

In the example 3, a flat portion having a width of 6 mm was left in a peripheral edge portion on a surface of a base material film, and a microlens array pattern was formed in a region inside thereof. An antireflection film was formed in a region 10 mm inside an outer peripheral end of the base material film. In this example, the flat portion was left in the peripheral edge portion of the base material film, a fine concave and convex pattern was formed in a smaller size than that of the base material film, the antireflection film was formed in a smaller size than that of the fine concave and convex pattern, and the antireflection film was not formed on a peripheral edge portion of the fine concave and convex pattern. A schematic plan view of a fine concave and convex pattern film manufactured in this example is illustrated in Fig. 2C. In the figure, reference numeral 4 denotes a formation region of the fine concave and convex pattern, reference numeral 5 denotes a formation region of the antireflection film, and reference numeral 6 denotes the flat portion.

In this example, even after the fine concave and convex pattern film was left for 200 hours at a temperature of 125°C, no crack occurred in the antireflection film.

### <Comparative Example 1>

In the comparative example, a fine concave and convex pattern film was manufactured in a similar manner to that in the example 3 except that an antireflection film was formed in a region 3 mm inside an outer peripheral end of a base material film. In this example, a flat portion was left in a peripheral edge portion of the base material film, a fine concave and convex pattern was formed in a smaller size than that of the base material film, the antireflection film was formed in a size smaller than that of the base material film and larger than that of the fine concave and convex pattern, and the antireflection film was formed on the fine concave and convex pattern and the flat portion. A schematic plan view of the fine concave and convex pattern film manufactured in this example is illustrated in Fig. 3. In the figure, reference numeral 4 denotes a formation region of the fine concave and convex pattern, reference numeral 5 denotes a formation region of the antireflection film, and reference numeral 6 denotes the flat portion.

In this example, after the fine concave and convex pattern film was left for 200 hours at a temperature of 125°C, a crack occurred in the antireflection film formed on the flat portion in the base material film. Further, when the fine concave and convex pattern film was left for 200 hours at a temperature of 125°C, the crack, which had occurred in the antireflection film on the flat portion, spread, and the crack spread up to the antireflection film on a microlens array pattern.

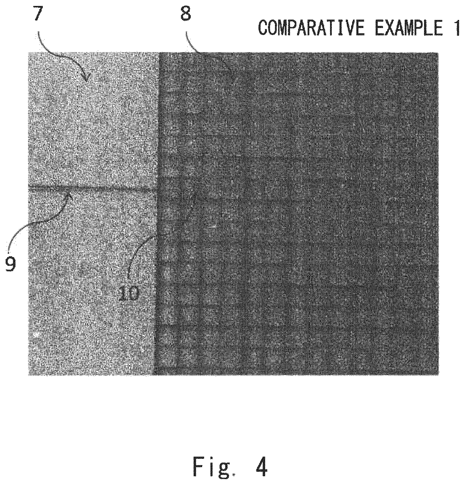

An optical micrograph of a sample after a heat resistance test for a total of 400 hours is illustrated in Fig. 4. In the figure, reference numeral 7 denotes a flat portion of a resin layer produced using ultraviolet curable resin, reference numeral 8 denotes a microlens array pattern, reference numeral 9 denotes a crack that has occurred in the flat portion, and reference numeral 10 denotes a crack that has occurred in a formation region of a microlens. The micrograph illustrated in Fig. 4 illustrates how a crack has spread up to the antireflection film on the microlens array pattern from the antireflection film on the flat portion.

This application is based upon and claims the benefit of priority from Japanese patent application No. 2019-060207, filed on March 27, 2019, the entire disclosure of which is incorporated herein in its entirety by reference.

### Reference Signs List

1 FILM MAIN BODY, 2 RESIN LAYER, 3 ANTIREFLECTION FILM, 4 FORMATION REGION OF FINE CONCAVE AND CONVEX PATTERN, 5 FORMATION REGION OF ANTIREFLECTION FILM, 6 FLAT PORTION, 10 BASE MATERIAL FILM, P FINE CONCAVE AND CONVEX PATTERN

## Claims

1. A fine concave and convex pattern film comprising:
a base material film having a fine concave and convex pattern on at least a part of a surface of the base material film; and
an antireflection film composed of an inorganic film formed on at least a part of a surface of the fine concave and convex pattern.

2. The fine concave and convex pattern film according to Claim 1, wherein
the fine concave and convex pattern is formed on a part of the surface of the base material film,
a flat portion where the fine concave and convex pattern is not formed exists around a formation region of the fine concave and convex pattern on the surface of the base material film, and
the antireflection film is formed on at least a part of the surface of the fine concave and convex pattern, and is not formed on the flat portion.

3. The fine concave and convex pattern film according to Claim 1 or 2, wherein the fine concave and convex pattern is a pattern having a plurality of fine projected portions or recessed portions arrayed therein, a center-center distance between the projected portions or the recessed portions adjacent to each other is 5 to 500 µm, and a height of each of the projected portions or a depth of each of the recessed portions is 1 to 100 µm.

4. The fine concave and convex pattern film according to Claim 3, wherein the fine concave and convex pattern is a microlens array pattern in which a boundary portion between the projected portions adjacent to each other or a boundary portion between the recessed portions adjacent to each other is non-planar.

5. The fine concave and convex pattern film according to any one of Claims 1 to 4, wherein the antireflection film has a single-layer structure or a multi-layer structure of a metal oxide film.

6. The fine concave and convex pattern film according to any one of Claims 1 to 5, wherein the fine concave and convex pattern film is for a screen of an image display device.

7. A head-up display device comprising the fine concave and convex pattern film according to Claim 6 as an intermediate screen.
